# EUROPEAN PATENT APPLICATION

(11) **EP 4 173 967 A1**
(43) Date of publication of application: **03.05.2023**
(21) Application number: 21205266.6
(22) Date of filing: 28.10.2021
(51) Int. Cl.: B64F 1/10, B64F 1/22

(54) **CAPTURE AND RELEASE MECHANISM FOR TOWING AIRCRAFTS THROUGH NOSE LANDING GEAR**

(71) Applicant: Lilium eAircraft GmbH, 82234 Wessling (DE)
(72) Inventor: OUTA, Ali, Wessling (DE); GUO, Wei, Wessling (DE); MORETTI, Luigi Ricci, Wessling (DE); RICE, Tom, Wessling (DE); BRESCIANI, Luca Mario, Wessling (DE)
(74) Representative: Grünecker Patent- und Rechtsanwälte PartG mbB

(57) **Abstract**

A capturing system (100) for a towing device (190) for towing an aircraft through its nose landing gear (200) and the corresponding towing method are disclosed herein. The capturing system comprises a cradle (110) for accommodating the nose landing gear (200), including a support element (120, 120') configured to secure and steer the nose landing gear (200) on the cradle; and a projecting capturing element (150) configured to capture an oleo shock absorber (210) of the nose landing gear (200), in order to funnel the nose landing gear (200) onto the support element (120, 120'). The capturing system (100) and the corresponding method according to the present disclosure allow to automate the capture and release process during towing operations, thus reducing the taxi cycle time. Moreover, they enable capturing the nose landing gear (200) of the aircraft even when the wheel (201) is not fully exposed and/or when it is covered with an aerodynamic fairing (202).

## Description

The present invention refers to a capturing system for a towing device for towing aircrafts through the Nose Landing Gear (NLG) and to the corresponding method. In particular, the present invention refers to a capturing system for a towing device that comprises an automated capture and release mechanism and that performs steering and braking functions and to the corresponding method.

### BACKGROUND

Towing devices are generally used for moving aircrafts without the aid of the aircraft's main drive (gas or propeller turbine) and they are usually designed so as to capture the Nose Landing Gear (NLG) of the aircraft and to move the aircraft to the Final Approach and Take-Off (FATO) area and/or to the parking area.

The towing devices known at the state of the art may be of different kinds. For example, unmanned, remote-controlled towbarless tugs may be employed to tow small aircrafts. In these devices, the aircraft's NLG is raised, therefore the tugs must have big dimensions in order to win the high weight forces of the aircrafts.

Other examples of towbarless tugs may include towing devices comprising a cradle system that captures the wheel around or above its center, in order to ensure enough grab during towing. A towing device of this type is disclosed for instance in document DE 10 2018207357 A1, wherein the towing device comprises a friction roller drive acting on a rotatable wheel of the aircraft (for instance, the nose wheel) and designed to be adapted to different wheel diameters.

Alternatively, towing devices comprising a tow bar or a belt wrapping structure may be employed, wherein the axle of the aircraft NLG is attached to the towing device via the tow bar or via the belt wrapping structure formed around the strut of the NLG. In the latter configuration, the belt wrapping structure must be secured manually before towing operations.

Existing solutions work well with fully exposed NLG wheels or with NLG wheels having at least a significantly exposed portion that can be efficiently captured and grabbed by the towing device. However, towing an aircraft through the NLG constitutes a challenge when the wheel is not fully exposed and when it is covered with an aerodynamic fairing.

Moreover, there is a constant need to make the towing process as quick as possible and to automatize it, in order to reduce the turnaround time between flights and taxi cycles.

In view of the above stated problems, it is an object of the present invention to provide a system and method to capture the NLG of an aircraft through an automated mechanism mounted on a towing vehicle, to secure the NLG and to provide steering and braking functions.

### SUMMARY

According to an embodiment of the present invention, a capturing system for a towing device for towing an aircraft through its nose landing gear is provided, the capturing system comprising:
- A cradle for accommodating the nose landing gear, the cradle comprising a support element configured to secure and steer the nose landing gear; and
- A projecting capturing element configured to capture an oleo shock absorber of the nose landing gear and to funnel the nose landing gear onto the support element, as a result of a reciprocal displacement between the nose landing gear and the cradle..

This solution is advantageous because it provides a capturing system for a towing device configured to automate and speed up the capture and release process of the nose landing gear of an aircraft during towing and parking operations. In this way, the taxi cycle time is advantageously reduced. For instance, the capture and release processes may be performed in 5-10 seconds. Moreover, the present solution may be profitably employed to capture the nose landing gear of an aircraft, even when the wheel is not fully exposed and/or when it is covered with an aerodynamic fairing. In fact, the capturing system is configured to capture the exposed portion of the oleo shock absorber and it does not interfere with the nose landing gear nor with its fairings.

The present solution may be advantageously combined with any towing device, such as towing tugs, and it can be retrofitted to existing towing tugs.

According to a preferred embodiment, the projecting capturing element may be configured to capture an oleo shock absorber of the nose landing gear and to induce a reciprocal displacement between the nose landing gear and the cradle, in order to funnel the nose landing gear onto the support element. For instance, the projecting capturing element may be configured to capture and pull the oleo shock absorber. Alternatively, the projecting capturing element may be configured to capture the oleo shock absorber and to be compressed by the nose landing gear driven toward the capturing system.

According to a preferred embodiment, the capturing system is configured to capture the exposed portion of an oleo shock absorber in an automatic way, for instance by automatically opening and closing a projecting capturing element such as a clamping element or a latching element. According to another embodiment, the capturing element may be designed so as to passively capture the oleo shock absorber. For instance, the capturing element may be a clamping element having a V-shape.

According to a preferred embodiment, the projecting capturing element may be made of any suitable material in order to not damage the stainless steel piston rod. For instance, the capturing element may be made of a light material with low friction or it may be made of a rigid material and the inner part contacting the piston rod may be covered with an elastic material.

According to a preferred illustrative configuration, the cradle may include a platform, for example a platform with a ramp, and the reciprocal displacement between the nose landing gear and the cradle may include making the platform slide underneath the nose landing gear, while pulling the oleo shock absorber. In this configuration, the nose landing gear may sit on the platform and be lifted off the ground. Preferably, the platform may comprise one or more constraint elements to funnel the wheel during the steering operations, in order to provide multiple locking points. In an alternative configuration, no constraints elements may be formed on the platform and the capturing element may represent the only locking point; in this case, the steering can be achieved by increasing the swivel offset on a castor nose wheel to a predefined length.

According to another illustrative configuration, the support element may be configured as a forklift and the reciprocal displacement between the nose landing gear and the cradle may include moving the cradle towards the nose landing gear, while keeping the oleo shock absorber captured, so as to constrain the nose landing gear within the recess of the forklift. In this configuration, the wheel of the nose landing gear may contact the ground while being captured.

According to a further embodiment of the present invention, a capturing system is provided, wherein the projecting capturing element is configured to capture a piston rod of the oleo shock absorber.

This configuration is advantageous because the piston rod provides a suitable capturing surface for the projecting capturing element on the oleo shock absorber. Furthermore, the piston rod is a resistant mechanical component designed to sustain a high load in all directions, such as horizontal, lateral and vertical loads. Moreover, capturing or clamping onto the piston rod provides greater tolerance for misalignment and limits the damage to the nose landing gear and its fairing.

According to an alternative embodiment, the capturing element may capture an extension of the axle of the oleo shock absorber.

According to a further embodiment of the present invention, a capturing system is provided, wherein the projecting capturing element comprises a grabber arm.

The advantage of this configuration is that the grabber arm projects from the cradle body and it can easily reach the oleo shock absorber. Moreover, it can be automatically opened and closed to capture a corresponding portion of the oleo shock absorber.

According to a further embodiment of the present invention, a capturing system is provided, wherein the projecting capturing element comprises a plurality of bearings for allowing rotation of the nose landing gear during the towing operation.

This configuration is advantageous because the nose landing gear is free to rotate and move during the towing operation, independently from the configuration of the projecting capturing element which is attached to the cradle.

According to a further embodiment of the present invention, a capturing system is provided, wherein a height of the projecting capturing element might be adjusted within a range comprised between a first height and a second height, wherein the first height corresponds to a first capturing position of the oleo shock absorber in the configuration of an empty aircraft and the second height corresponds to a second capturing position of the oleo shock absorber in the configuration of a Maximum Take-Off Weight (MTOW) aircraft.

The advantage of this configuration is that the projecting capturing element can capture the oleo shock absorber both in the configuration wherein the aircraft is empty and therefore the oleo shock absorber reaches a longer extension, and in the configuration of Maximum Take-Off Weight (MTOW) of the aircraft, wherein the oleo shock absorber reaches a shorter extension.

Preferably, in the static position, the oleo shock absorber has a predefined height set between two extremities of the exposed portion of the piston rod. The predefined height is selected so that the capturing element can work both with an empty aircraft and with a MTOW aircraft and in any configuration in between. Moreover, the predefined height is also designed to enable clamping with a flat tire.

Preferably, the height of the capturing element is regulated so as to take into account also the height of the support element.

According to a further embodiment of the present invention, a capturing system is provided, wherein the capturing system comprises a linear actuator connected to the projecting capturing element and configured to pull the nose landing gear towards the projecting capturing element. The advantage of this configuration is that the capture of the oleo shock absorber is ensured by simply displacing the linear actuator and the capturing element connected thereto and by pulling the grabbed portion of the oleo shock absorber, so as to induce a sliding of the cradle underneath the nose landing gear. The capture and release process is hence fast and efficient.

For instance, the capturing element may be designed in such a way that it automatically opens and closes when it is positioned at a certain distance from the oleo shock absorber, in order to enable the capture process.

According to a preferred configuration, the reciprocal position between the capturing system and the nose landing gear may be adjusted both by moving the capturing system closer to the nose landing gear and by moving the capturing element through the linear actuator.

For instance, the capturing element coupled to the linear actuator may be configured to extend so as to match the distance separating it from the oleo shock absorber and it may be configured to move along a distance corresponding to the length of the support element.

According to a further embodiment of the present invention, a capturing system is provided, wherein the projecting capturing element comprises a rotating mechanism for rotating the projecting capturing element with respect to the oleo shock absorber, for example for enabling clamping even when the capturing system is not aligned with the oleo shock absorber.

The advantage of this configuration is that the capturing element may be provided with a rotation mechanism for allowing precise positioning with respect to the oleo shock absorber. For example, a slight lateral offset between the capturing system and the nose landing gear of the nose landing gear may be compensated by a rotation of the capturing element. In this way, the capture process is carried out in a fast and efficient way.

According to a further embodiment of the present invention, a capturing system is provided, wherein the support element comprises a rear stopper for locking the position of the nose landing gear once it has been accommodated on the cradle and preventing any backwards movement of the nose landing gear.

This configuration is advantageous because it provides additional securing points and it prevents any backward movement of the nose landing gear, which could cause potential damage to people standing in the Final Approach and Take-Off (FATO) area and/or in the parking area of the aircraft. In fact, after the nose landing gear has been clamped and grabbed by the projecting capturing element and it has been accommodated onto the cradle, it can be secured and blocked by the rear stopper.

Preferably, the rear stopper is an active stopper or an active aft door that is activated to fully lock the nose landing wheel as an additional securing point, in addition to the first connection point of the capturing element.

According to a further embodiment of the present invention, a capturing system is provided, wherein the support element comprises a platform, for instance a platform with a ramp.

The advantage of this configuration is that the capturing and loading operations are simplified, because the nose landing gear is easily accommodated on the platform as a result of the relative displacement between the capturing system and the nose landing gear. Moreover, in this configuration, the nose wheel sits on the platform and is lifted off the ground, therefore the capturing system benefits from increased traction during the towing operation.

According to a further embodiment of the present invention, a capturing system is provided, wherein the support element comprises a platform provided with a plurality of stopping elements, for instance a front stopper and one or more side constraints, in order to anchor the nose landing gear to the cradle.

This configuration is advantageous because it provides additional securing points and it prevents any forward and/or lateral movement of the nose landing gear. The stopping elements, for example the front stopper and the side constraints, can safely secure the wheel and also actively control the steering of the nose wheel. Moreover, in this configuration, the nose wheel is lifted off the ground, therefore the capturing system benefits from increased traction during the towing operation.

Preferably, the side constraints may be configured to funnel the nose landing gear into the stopper and they may be formed as elastic bumpers matching the size of the wheel.

According to a further embodiment of the present invention, a capturing system is provided, wherein the support element is configured as a forklift and the nose landing gear is funneled into a recess formed by the forklift.

This configuration is advantageous because it provides additional securing points and it prevents any forward and/or lateral movement of the nose landing gear. The recess of the forklift can safely secure the wheel and also actively control the steering of the nose wheel. Moreover, in this configuration, the nose wheel contacts the ground, therefore the capturing system does not have to carry the weight of the aircraft.

According to a further embodiment of the present invention, a capturing system is provided, wherein the projecting capturing element comprises an arm having a predefined length and configured so as to capture the oleo shock absorber, when the support element is driven under the nose landing gear.

The advantage of this configuration is that the oleo shock absorber can be easily captured by a fixed arm having a predefined length. In fact, the predefined length of the arm can be designed so that, when the support element, for instance a platform with a ramp, is driven under the nose landing gear and the nose wheel sits on the support element, the arm reaches the oleo shock absorber and captures it.

According to a further embodiment of the present invention, a towing device for towing an aircraft through its nose landing gear is provided, the towing device comprising:
- A capturing system as the ones described above;
- A taxi mechanism for driving the capturing system.

This solution is advantageous because the taxi cycle time is advantageously reduced. For instance, the total taxi time may be reduced to approximately 1-2 minutes and the capture and release processes may be performed in 5-10 seconds. Moreover, the present solution may be profitably employed to tow an aircraft through its nose landing gear, even when the wheel is not fully exposed and/or when it is covered with an aerodynamic fairing. In fact, the capturing system is configured to capture the exposed portion of the oleo shock absorber and it does not interfere with the nose landing gear nor with its fairings, but, at the same time, it ensures sufficient pulling force.

For instance, the taxi mechanism may be any towing vehicle, such as towing tugs or tanks.

According to a further embodiment of the present invention, a towing device is provided, wherein the taxi mechanism is also configured to move the towing device towards the nose landing gear, so that the nose landing gear can be accommodated on to the support element.

The advantage of this configuration is that the taxi mechanism can drive the towing device with the capturing element towards the nose landing gear, so that the reciprocal distance between the capturing element and the nose landing gear is reduced and the nose landing gear is positioned on the support element. For instance, the capturing element may be designed in such a way that it automatically opens when it is positioned at a certain distance from the oleo shock absorber, in order to enable the capture process.

Preferably, the taxi mechanism may ensure both backward and forward movements along the direction that connects the towing device and the nose landing gear.

According to a preferred embodiment, the capturing element may be configured as an arm having a predefined length and the taxi mechanism may comprise towing motors for propelling the support element, for instance a platform, under the nose landing gear. The predefined length of the arm may be advantageously designed so that, when the nose wheel sits on the platform, the arm can reach the oleo shock absorber and can actively or passively capture the exposed portion of the oleo shock absorber.

According to a further embodiment of the present invention, a method for capturing the nose landing gear of an aircraft by means of a capturing system is provided, the method comprising the following steps:
a) Positioning a projecting capturing element of the capturing system at a predetermined distance with respect to an oleo shock absorber of the aircraft;
b) Capturing the oleo shock absorber by means of the projecting capturing element, preferably capturing a piston rod of the oleo shock absorber;
c) Inducing a reciprocal displacement between the nose landing gear and the capturing system;
d) Funneling the nose landing gear on a support element of the capturing system;
e) Securing the nose landing gear on the support element.

This solution is advantageous because it provides a method to automate and speed up the capture and release process of the nose landing gear of an aircraft during towing and parking operations. In this way, the taxi cycle time is advantageously reduced. For instance, the capture and release processes may be performed in 5-10 seconds. Moreover, the present method may be profitably employed to capture the nose landing gear of an aircraft, even when the wheel is not fully exposed and/or when it is covered with an aerodynamic fairing. In fact, the capturing system is configured to capture the exposed portion of the oleo shock absorber and it does not interfere with the nose landing gear nor with its fairings.

Preferably, the capturing step is automated, so that a capturing mechanism is actively closed or opened under predefined conditions, for instance when a predefined distance from the nose landing gear is reached or after a predefined time interval. For example, the capturing step may include clamping or latching the oleo shock absorber.

According to a preferred configuration, the step b) is carried out by capturing the piston rod of the oleo shock absorber. In fact, capturing onto the piston rod provides greater tolerance for misalignment and limits the damage to the nose landing gear and its fairings. Moreover, the piston rod is a resistant mechanical element designed to sustain a high load from all sides. Alternatively, the step b) may be carried out by capturing an extension of the axle of the oleo shock absorber.

According to a preferred configuration, the step c) may comprise pulling the nose landing gear towards the capturing system, through the oleo shock absorber, so that the nose landing gear wheel rolls on a support element, for instance a platform, of the capturing system and the nose landing gear is accommodated thereon. Alternatively, the nose landing gear may be pulled so as to be positioned into a recess of the support element, for example a recess of a forklift.

According to an alternative preferred configuration, the step c) may comprise driving the capturing system towards the nose landing gear, so that the support element slides under the nose wheel.

According to a preferred configuration, the step of inducing a reciprocal displacement between the nose landing gear and the capturing system may comprise driving a support element, for instance a platform or a forklift, underneath the nose landing gear.

According to a further embodiment of the present invention, a method is provided, further comprising the following step:
f) Adjusting the height of the projecting capturing element, so that it ranges between a first height and a second height, wherein the first height corresponds to a first capturing position of the oleo shock absorber in the configuration of an empty aircraft and the second height corresponds to a second capturing position of the oleo shock absorber in the configuration of the maximum take off weight (MTOW) aircraft.

The advantage of this method is that the capturing and the towing functions may be performed both in the configuration wherein the aircraft is empty and the oleo shock absorber has thus a longer extension and in the configuration of Maximum Take-Off Weight of the aircraft and the oleo shock absorber has thus a shorter extension. The capturing and towing functions are also ensured in any intermediate configuration of the aircraft and in the case of a flat tire.

According to a further embodiment, the support element height is designed as to take up any remaining vertical clearance between the position of the capturing element and the oleo shock absorber.

According to a further embodiment of the present invention, a method is provided, wherein the step (a) comprises moving the capturing system towards the nose landing gear, for instance by means of a taxi mechanism, so that the nose landing gear is accommodated on the support element.

The advantage of this configuration is that the capture process is performed in a fast and efficient way, because the capturing system with the capturing element is driven towards the nose landing gear, so that the reciprocal distance between the capturing element and the nose landing gear is reduced and the capturing mechanism is triggered.

According to a preferred configuration, as a result of the movement of the capturing system, the support element is driven under the nose landing gear. Preferably, the capturing element may be configured as an arm having a predefined length and the support element may be configured as a platform with a ramp and the step (a) may comprise propelling the ramp under the nose landing gear so that the arm can capture the exposed portion of the oleo shock absorber.

According to a further embodiment of the present invention, a method is provided, wherein the step (b) comprises pulling the oleo shock absorber towards the projecting capturing element, for instance by means of a linear actuator.

The advantage of this configuration is that the capture process is performed in a fast and efficient way, because the capture of the oleo shock absorber is ensured by simply extending the linear actuator and the capturing element connected thereto and by pulling the grabbed portion of the oleo shock absorber, so as to induce a sliding of the cradle underneath the nose landing gear.

According to a further embodiment of the present invention, a method is provided, wherein the funneling of the step (d) comprises providing the support element with a platform with a plurality of stopping elements, for instance a front stopper and one or more side constraints, configured to anchor the nose landing gear to the support element.

The advantage of this configuration is that it provides additional securing points for the nose landing gear, in addition to the capturing element, and that it allows to actively control its steering during the towing process.

Preferably, the side constraints are formed as bumpers configured to funnel the nose landing gear into the front stopper.

According to a further embodiment of the present invention, a method is provided, wherein the funneling of the step (d) comprises providing the support element with a forklift shape, so that the nose landing gear is funneled into a recess of said forklift.

The advantage of this configuration is that the nose landing gear is safely secured to the support element and that its steering is actively controlled during the towing process. In this way, any forward and/or lateral movement of the nose landing gear within the support element is prevented. According to a further embodiment of the present invention, a method is provided, wherein the step (e) comprises securing the rear part of the nose landing gear by lifting a rear stopper on the support element in order to prevent backwards movement of the nose landing gear.

The advantage of this configuration is that it provides additional securing points for the nose landing gear, in addition to the capturing element. Moreover, any backward movement of the nose landing gear is prevented, thus reducing the risk of damaging people standing in proximity of the FATO area and/or of the parking area.

According to a further embodiment of the present invention, a method is provided, wherein the nose landing gear comprises a wheel covered with a fairing.

The advantage of this capturing method is that it enables capturing the nose landing gear even when the wheel is not fully exposed and is for instance covered with a fairing, because there is no need to grab the entire wheel, but also the exposed portion of the piston rod.

According to a further embodiment of the present invention, a method for towing an aircraft through its nose landing gear is provided, the method comprising the following steps:
- Capturing the nose landing gear of an aircraft according to any of the previously disclosed methods;
- Towing the nose landing gear and the aircraft by driving the capturing system by means of a taxi mechanism.

This solution is advantageous because the taxi cycle time is advantageously reduced. For instance, the total taxi time may be reduced to approximately 1-2 minutes and the capture and release processes may be performed in 5-10 seconds. Moreover, the present solution may be profitably employed to tow an aircraft through its nose landing gear, even when the wheel is not fully exposed and/or when it is covered with an aerodynamic fairing. In fact, the capturing system is configured to capture the exposed portion of the oleo shock absorber and it does not interfere with the nose landing gear nor with its fairings, but, at the same time, it ensures sufficient pulling force.

For instance, the towing step may be performed by means of any towing vehicle, such as towing tugs.

### FIGURES

The present invention will be described with reference to the attached figures in which the same reference numbers and/or signs indicate the same part and/or similar and/or corresponding parts of the machine. In the figures:
Figure 1 schematically illustrates a side view of a towing device according to an embodiment of the present invention.
Figure 2 schematically illustrates a three-dimensional view of a towing device according to another embodiment of the present invention.
Figure 3 schematically illustrates a step of a towing method according to an embodiment of the present invention.
Figure 4 schematically illustrates a further step of a towing method according to an embodiment of the present invention.
Figure 5 schematically illustrates a further step of a towing method according to an embodiment of the present invention.
Figure 6 schematically illustrates a step of a towing method according to another embodiment of the present invention.
Figure 7 schematically illustrates a step of a towing method according to another embodiment of the present invention.

### DESCRIPTION

In the following, the present invention is described with reference to particular embodiments as shown in the enclosed drawings. Nevertheless, the present invention is not limited to the particular embodiments described in the following detailed description and shown in the figures, but, instead, the embodiments described simply exemplify several aspects of the present invention, the scope of which is defined by the appended claims.

Further modifications and variations of the present invention will be clear for the person skilled in the art. Therefore, the present description has to be considered as including all the modifications and/or variations of the present invention, the scope of which is defined by the appended claims.

For simplicity, identical or corresponding components are indicated in the figures with the same reference numbers.

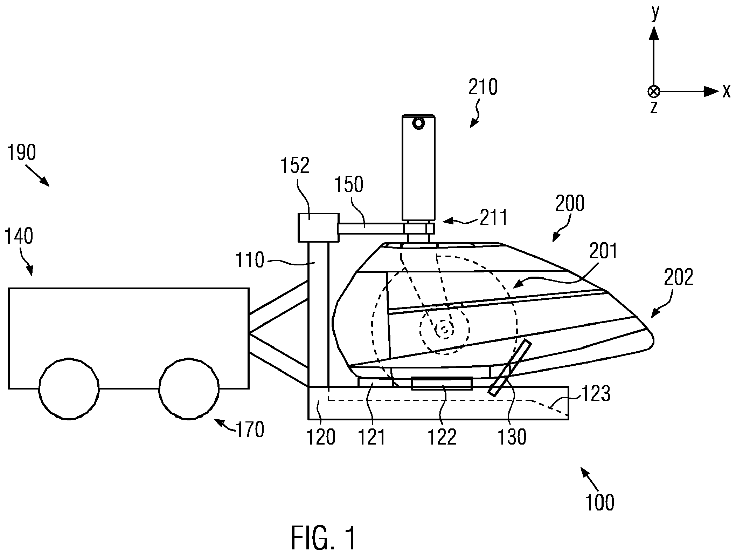

Figure 1 schematically illustrates a side view of a towing device 190, according to an embodiment of the present invention.

The towing device 190 comprises a capturing system 100 and a taxi mechanism 140.

The capturing system 100 comprises a cradle 110 for accommodating the nose landing gear 200 of the aircraft that must be moved back and forth from the FATO area and the parking area. The nose landing gear 200 comprises a nose wheel 201 with an aerodynamic fairing 202 and an oleo shock absorber 210. Since the nose wheel 201 is covered by the fairing 202, it cannot be easily grabbed during towing operations. Therefore, a capturing system 100 according to the present invention is advantageously employed.

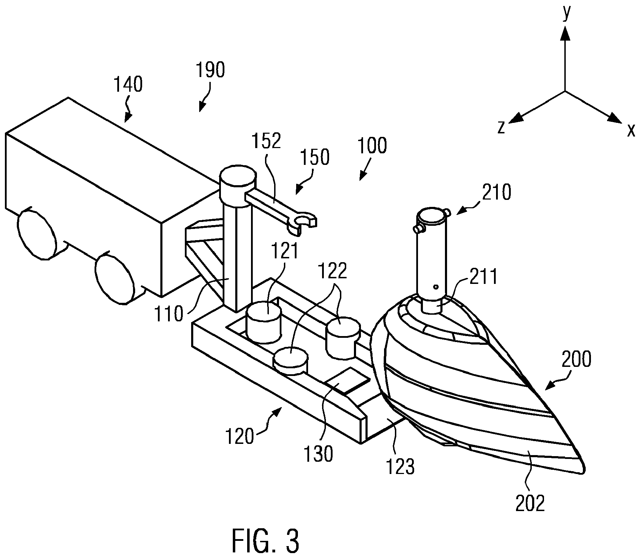

The cradle 110 comprises a support element 120 configured for securing and steering the nose landing gear 200. In the embodiment shown in Figure 1, the support element 120 is configured as a platform 120 with a ramp 123 and the nose landing gear 200 is lifted off the ground and sits on the platform 120. This configuration has the advantage of providing optimal traction of the aircraft. The cradle 110 according to this configuration is also illustrated in the three dimensional view of the towing device in Figure 3.

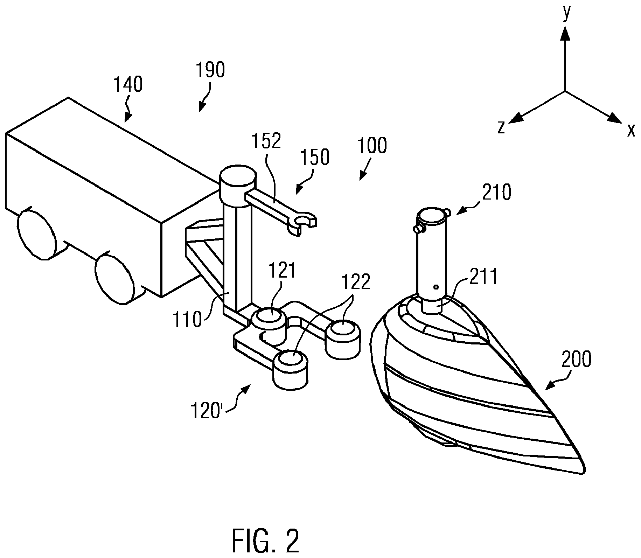

The platform 120 is equipped with a front stopper 121 and two side constraints 122, in order to safely secure the wheel 201 of the nose landing gear 200 after it has been accommodated on the platform 120. As it can be seen in details in Figures 2 and 3, the front stopper 121 and the side constraints 122 form a holding channel on the platform 120 for funneling the nose wheel 201 during the loading and towing operations. Preferably, the side constraints 122 are shaped in such a way that they funnel the wheel of the nose landing gear 200 into the stopper 121 and constrain it on all sides. This design allows an easier capture of the wheel 201, in order to actively control its steering during the towing operations. Preferably, the front stopper 121 and the side constraints 122 are configured as low profile bumpers.

Even if one front stopper 121 and two side constraints 122 are shown in Figures 2 and 3, it is clear that any number of front stoppers and/or side constraints could be formed on the platform 120.

According to an alternative embodiment (not shown), the support element 120 may not be provided with any constraint elements. In this case, the nose landing gear 200 may be connected to the capturing system 100 only by means of the capturing element 150 and precise steering may be achieved by increasing the swivel offset on the castor nose wheel to a predefined length. The capturing system 100 is advantageously provided with a projecting capturing element 150, which enables automatic capture and release of a piston rod 211 of the oleo shock absorber 210 of the nose landing gear 200. In the towing device 100 of Figure 1, the capturing element is configured as a grabber arm 150.

The grabber arm 150 projects from the cradle structure and it may be configured to automatically open and close under predefined conditions, so as to clamp and capture the exposed portion of the piston rod 211 of the nose landing gear 200. Alternatively, the grabber arm 150 may be configured to protrude from the cradle structure and to allow passive capture of the exposed portion of the piston rod 211.

In the embodiment of Figure 1, the grabber arm 150 is connected to the linear actuator 152. The linear actuator 152 allows a displacement of the grabber arm 150 along the x-axis, so that the grabber arm 150 can reach and capture the piston rod 211 of the nose landing gear 200.

The capturing system 100 shown in Figure 1 also comprises a rear stopper or aft door 130, which can be automatically activated to fully lock the rear part of the wheel 201, after it has been accommodate onto the cradle 110.

In the configuration illustrated in Figure 1, multiple securing and locking positions are provided to the nose landing gear 200 for greater safety. A first locking position is represented by the grabber arm 150, which enables the capture of the oleo shock absorber 210. A second locking position is provided by the front stopper 121 and the side constraints 122 forming the holding channel on the platform 120. A third locking position is given by the rear stopper 130.

A taxi mechanism 140 is further added to the capturing system 100, in order to obtain a self-propelled towing device 190 that can autonomously move and can drive the aircraft. The taxi mechanism 140 may include a towing tug or tank.

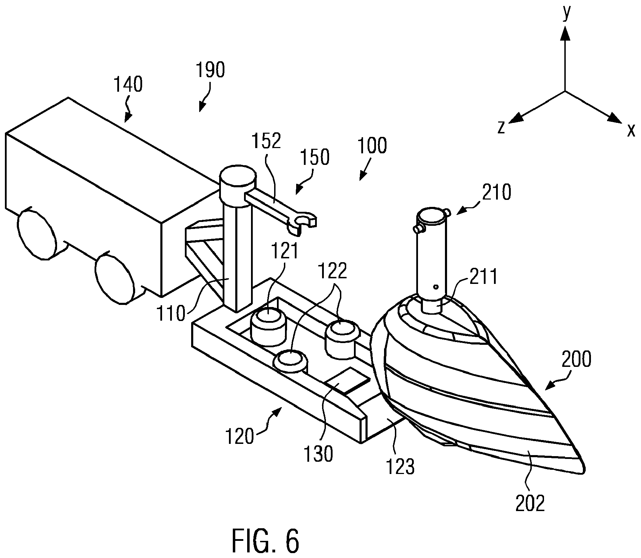

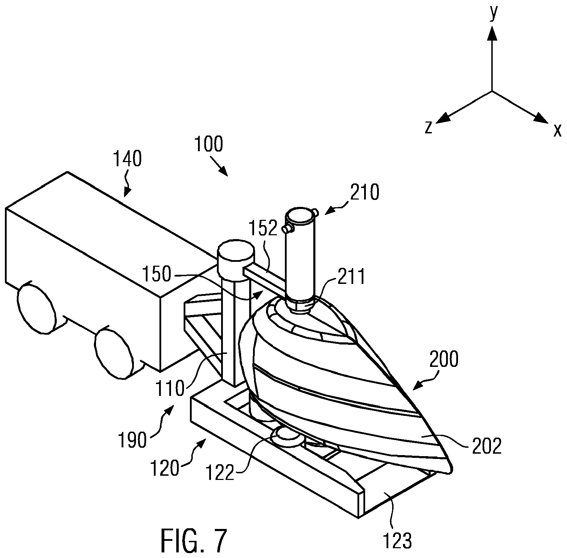

In an alternative configuration, the linear actuator 152 may not be present and the relative displacement between the grabber arm 150 and the piston rod 211 may be simply ensured by the taxi mechanism 140, which can propel the entire capturing system 100 towards the nose landing gear 200 and place the platform 120 or forklift 120' under the wheel 201 (see Figs. 6 and 7 described below). Preferably, the grabber arm 150 may be an arm having a predefined length and it may be configured to actively or passively capture the piston rod 211 when the distance between the capturing system 100 and the nose landing gear 200 matches the predefined length of the arm 150.

Figure 2 illustrates a towing device 190 according to another embodiment of the present invention. In the embodiment shown in Figure 2, the support element 120' is configured as a forklift and does not comprise any platform for lifting the nose landing gear 200. In this configuration, the nose landing gear 200 is accommodated into the recess of the forklift 120' and the nose wheel 201 contacts the ground. Since the nose landing gear 200 is free to roll during the towing operations in the embodiment of Figure 2, this solution has the advantage that the towing device 100 does not have to carry the weight of the aircraft during towing.

In the following, the method for capturing an aircraft through its nose landing gear 200, by means of a towing device 190 including a capturing system 100 with a linear actuator 152, will be described with reference to Figures 3 to 5.

As a first step (schematically shown in Fig. 3), it is necessary to correctly position the capturing system 100 in front of the nose landing gear 200 of the aircraft. Preferably, it is necessary to check and adjust the position of the capturing system 100 with respect to the nose landing gear 200 along all directions, i.e. along all Cartesian axes.

Referring to the reference system of Figure 3, the distance between the capturing system 100 and the nose landing gear 200 along the x-axis must be regulated so that the grabber arm 150 can extend and automatically reach and capture the piston rod 211 of the nose landing gear 200. For instance, the distance between the capturing system 100 and the nose landing gear 200 may be regulated so that the grabber arm 150 can reach the piston rod 211 as a result of an extension of the linear actuator 152 and that the capturing mechanism can be triggered. For instance, the capturing system 100 may be moved towards the nose landing gear 200 until the nose landing gear 200 is lifted on the ramp 123 of the platform 120 and the piston rod 210 is captured by the grabber arm 150, for instance actively or passively captured.

Referring to the reference system of Figure 3, the height of the grabber arm 150 along the y-axis must be regulated so that the grabber arm is aligned with the exposed grabbing portion of the piston rod 211. In the static configuration, the oleo shock absorber 210 has a predefined height between two extremities of the exposed portion of the piston rod 211. The predefined height of the grabber arm 150 with respect to the piston rod 211 is selected so that the grabber arm 150 can work both in the configuration of an empty aircraft and in the MTOW configuration and in any intermediate configuration. Moreover, the height is selected so that the grabber arm 150 can work also in the event of a flat tire. The height of the grabber arm 150 may be adjusted by means of a suitable mechanism according to the extension of the exposed grabbing portion of the piston rod 211 in the particular configuration of the aircraft.

Furthermore, the height of the platform 120 may be sized to take up any remaining vertical offset between the grabber arm 150 and the oleo shock absorber 210.

Referring to the reference system of Figure 3, any lateral offset along the z-axis between the capturing system 100 and the nose landing gear 200 must be reduced, so that the grabber arm 150 can reach and capture the piston rod 211. For example, the grabber arm 150 and/or the linear actuator 152 may be provided with a rotation mechanism 170, so that any lateral offset between the capturing system 100 and the nose landing gear 200 can be compensated by a rotation of the grabber arm 150.

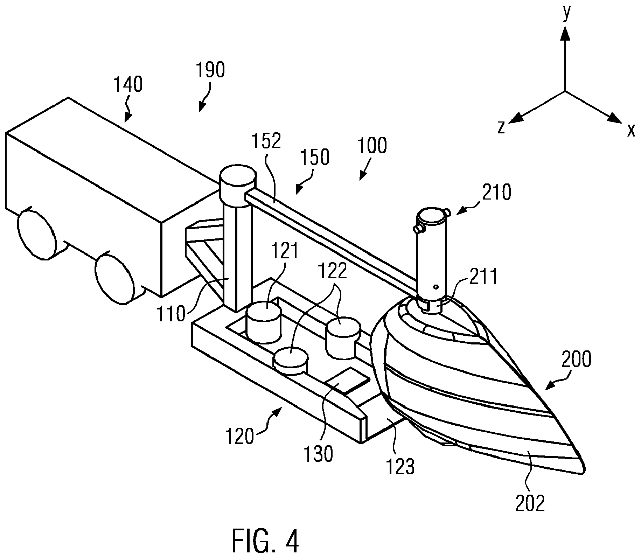

As shown in Figure 4, after the correct position between the towing device 100 and the nose landing gear 200 has been regulated and set along all axes, the grabber arm 150 is extended and activated to automatically capture the piston rod 211, for example by clamping or latching. For instance, the grabber arm 150 may be configured to automatically open and close in predefined conditions, for example when a predefined distance is reached and/or after a predefined time interval. Alternatively, the grabber arm 150 may be configured to passively capture the piston rod 211, once they are put in contact.

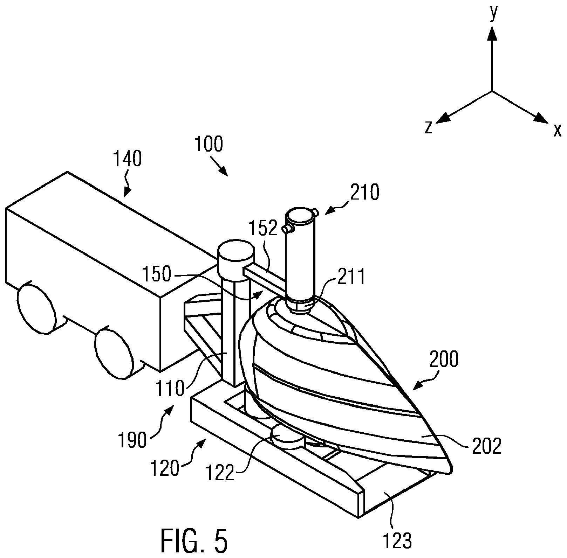

As shown in Figure 5, after capturing, the grabber arm 150 pulls the nose landing gear 200 towards the capturing system 100, so that the nose wheel 201 rolls along the ramp 123 and the platform 120 and is guided between the two side constraints 122. Preferably, the front stopper 121 and the two side constraints 122 may be configured as low profile bumpers forming a holding channel and the nose wheel 201 may roll along that holding channel. In this way, the front stopper 121 and of the side constraints 122 can funnel and anchor the nose wheel 201 on the platform 120. Moreover, the rear stopper 130 may be used to prevent any backwards movement of the wheel 201.

The synergistic action of the grabber arm 150, the front stopper 121, the side constraints 122 and rear stopper 130 provide multiple locking points, thus ensuring safe steering and driving of the aircraft.

In the following, the method for capturing an aircraft through its nose landing gear 200, by means of a towing device 190 including a capturing system 100 with a fixed grabber arm 150, will be described with reference to Figures 6 and 7.

The capturing element 100 of Figures 6 differs from the one of Figure 3 in that it comprises a grabber arm 150 having a predefined length and does not include a linear actuator. In this configuration, the pulling action of the grabber arm 150 coupled with the linear actuator is thus replaced by a movement of the entire capturing system 100 towards the nose landing gear 200. As a first step (schematically shown in Fig. 6), it is necessary to correctly position the capturing system 100 in front of the nose landing gear 200 of the aircraft.

Referring to the reference system of Figure 6, the height of the grabber arm 150 along the y-axis and the lateral offset between the grabber arm 150 and the nose landing gear 200 along the z-axis must be regulated so that, when the capturing system 100 with the grabber arm 150 is driven towards the nose landing gear 200, the grabber arm 150 can directly reach and capture the piston rod 211 of the nose landing gear 200. In other words, the height and the lateral position of the grabber arm 150 must be regulated so as to match exactly the height and the lateral position of the piston rod 211.

In a further step, the taxi mechanism 140 propels the entire capturing system 100 towards the nose landing gear 200, so that the nose wheel 201 rolls on the ramp 123 and then on the platform 120 and accordingly the platform 120 slides under the nose landing gear 200. When the distance between the grabber arm 150 and the piston rod 211 reaches the predefined length of the grabber arm 150, the capture mechanism is triggered and the piston rod 211 is automatically captured by the grabber arm 150.

In a further step, which is schematically illustrated in Figure 7, the piston rod 211 is captured by the grabber arm 150 and the nose wheel 201 is lifted off the ground; the nose landing gear 200 is advantageously funneled in the holding channel formed by the front stopper 121 and the side constraints 122 of the platform 120. Therefore, the capturing action of the grabber arm 150 is performed as a result of a precise positioning of the capturing system 100 with respect to the nose landing gear 200 and as a result of a funneling of the nose wheel 201 in the holding channel.

After capturing the aircraft through its nose landing gear 200 according to any of the methods disclosed above, the aircraft is towed by the towing device 190 comprising the capturing system 100 by activating the taxi mechanism 140, for instance a towing tug or tank. Preferably, the taxi mechanism 140 is provided with a damping system to allow taxing over uneven surfaces. For instance, the taxi mechanism 140 may be provided with suitable tires 170 to damp the weight of the aircraft when moving over uneven surfaces.

Preferably, the platform 120 is provided with suspensions to the taxi mechanism 140 so that the nose landing gear 200 is isolated from any taxing loads.

In order to ensure optimum steering control during the towing step, the grabber arm 150 may be provided with bearings, in order to allow the wheel 201 to freely rotate during the towing operations. It has to be understood that, even if the capturing and towing method has been described with reference to a capturing system 100 comprising a platform 120, it is clear that the same method may be adapted to the capturing system 100 comprising a support element configured as a forklift 120', which is shown in Figure 2. In this case, the nose landing gear 200 may be pulled by the grabber arm 150, through the piston rod 211, so that it is accommodated into the recess of the forklift 120' and then it may be secured, steered and towed. Alternatively, the capturing system 100 may be driven towards the nose landing gear 200 so as to constrain it into the recess of the tuning fork, before performing the securing, steering and towing operations.

While the invention has been described with respect to the preferred physical embodiments constructed in accordance therewith, it will be apparent to those skilled in the art that various modifications, variations and improvements of the present invention may be made in the light of the above teachings and within the purview of the appended claims without departing from the spirit and intended scope of the invention.

In addition, the areas that are considered familiar to those of ordinary skill in the art have not been described herein, in order not to unnecessarily obscure the invention described. Accordingly, it has to be understood that the invention is not to be limited by the specific illustrative embodiments, but only by the scope of the appended claims.

### LIST OF REFERENCES

- 100:: capturing system
- 110:: cradle
- 120, 120':: support element
- 121:: front stopper
- 122:: side constraints
- 123:: ramp
- 130:: rear stopper
- 140:: taxi mechanism
- 150:: capturing element
- 151:: bearings of the capturing element
- 152:: linear actuator
- 160:: rotating mechanism
- 170:: damping means
- 190:: towing device
- 200:: nose landing gear
- 201:: wheel
- 202:: fairing
- 210:: oleo shock absorber
- 211:: piston rod of the oleo shock absorber

## Claims

1. A capturing system (100) for a towing device (190) for towing an aircraft through its nose landing gear (200), said capturing system (100) comprising:
- A cradle (110) for accommodating said nose landing gear (200), said cradle (110) comprising a support element (120, 120') configured to secure and steer said nose landing gear (200); and
- A projecting capturing element (150) configured to capture an oleo shock absorber (210) of said nose landing gear (200) and to funnel said nose landing gear (200) onto said support element (120, 120') as a result of a reciprocal displacement between said nose landing gear (200) and said cradle (110).

2. The capturing system (100) according to claim 1, wherein said projecting capturing element (150) is configured to capture a piston rod (211) of said oleo shock absorber (210).

3. The capturing system (100) according to claim 1 or 2, wherein said projecting capturing element (100) comprises a grabber arm.

4. The capturing system (100) according to any of claims 1 to 3, wherein said projecting capturing element (150) comprises a plurality of bearings (151) for allowing rotation of said nose landing gear (200) during said towing operation.

5. The capturing system (100) according to any of claims 1 to 4, wherein a height of said projecting capturing element (150) may be adjusted within a range comprised between a first height and a second height, wherein said first height corresponds to a first capturing position of said oleo shock absorber (210) in the configuration of an empty aircraft and said second height corresponds to a second capturing position of said oleo shock absorber (210) in the configuration of a Maximum Take Off Weight (MTOW) aircraft.

6. The capturing system (100) according to any of claims 1 to 5, wherein said capturing system (100) further comprises a linear actuator (152) connected to said projecting capturing element (150) and configured to pull said nose landing gear (200) towards said projecting capturing element (150).

7. The capturing system (100) according to any of claims 1 to 6, wherein said projecting capturing element (150) comprises a rotating mechanism (160) for rotating said projecting capturing element (150) with respect to said oleo shock absorber (210).

8. The capturing system (100) according to any of claims 1 to 7, wherein said support element (120, 120') comprises a rear stopper (130) for locking the position of said nose landing gear (200) once it has been accommodated on said cradle (110) and for preventing any backwards movement of said nose landing gear (200).

9. The capturing system (100) according to any of claims 1 to 8, wherein said support element (120, 120') comprises a platform, for instance a platform with a ramp (123).

10. The capturing system (100) according to any of claims 1 to 9, wherein said support element (120, 120') comprises a platform provided with a plurality of stopping elements, for instance a front stopper (121) and one or more side constrains (122), configured to anchor said nose landing gear (200) to said cradle (110).

11. The capturing system (100) according to any of claims 1 to 8, wherein said support element (120') is configured as a forklift and said nose landing gear (200) is funneled into a recess formed by said forklift.

12. The capturing system (100) according to any of claims 1 to 11, wherein said projecting capturing element (150) comprises an arm having a predefined length and configured so as to capture said oleo shock absorber (210), when said support element (120, 120') is driven under said nose landing gear (200).

13. A towing device (190) for towing an aircraft through its nose landing gear (200), said towing device (190) comprising:
- A capturing system (100) according to any of claims 1 to 12;
- A taxi mechanism (140) for driving said capturing system (100).

14. A method for capturing the nose landing gear (200) of an aircraft by means of a capturing system (100), said method comprising the following steps:
a) Positioning a projecting capturing element (150) of said capturing system (100) at a predetermined distance with respect to an oleo shock absorber (210) of said aircraft;
b) Capturing said oleo shock absorber (210) by means of said projecting capturing element (150), preferably capturing a piston rod (211) of said oleo shock absorber (210);
c) Inducing a reciprocal displacement between said nose landing gear (200) and said capturing system (100);
d) Funneling said nose landing gear (200) on a support element (120, 120') of said capturing system (100);
e) Securing said nose landing gear (200) on said support element (120, 120').

15. The method according to claim 14 further comprising the following step:
f) Adjusting the height of said projecting capturing element (150) with respect to said oleo shock absorber (210), so that it is comprised within a range between a first height and a second height, wherein said first height corresponds to a first capturing position of said oleo shock absorber (210) in the configuration of an empty aircraft and said second height corresponds to a second capturing position of said oleo shock absorber (210) in the configuration of a Maximum Take Off Weight (MTOW) aircraft.

16. The method according to claim 14 or 15, wherein said step a) comprises moving said capturing system (100) towards said nose landing gear (200), for instance by means of a taxi mechanism (140), so that said nose landing gear (200) is accommodated on said support element (120, 120').

17. The method according to any of claims 14 to 16, wherein said step b) comprises pulling said oleo shock absorber (210) towards said projecting capturing element (150), for instance by means of a linear actuator.

18. The method according to any of claims 14 to 17, wherein said nose landing gear (200) comprises a wheel (201) covered with a fairing (202).

19. A method for towing an aircraft through its nose landing gear (200) comprising the following steps:
- Capturing said nose landing gear (200) according to the method of any of claims 14 to 18;
- Towing said nose landing gear (200) and said aircraft by driving said capturing system (100) by means of a taxi mechanism (140).
